# EUROPEAN PATENT SPECIFICATION

(11) **EP 3 509 888 B1**
(45) Date of publication and mention of the grant of the patent: **10.08.2022**
(21) Application number: 17849196.5
(22) Date of filing: 11.08.2017
(51) Int. Cl.: B60K 15/035, B62D 33/067, F17C 13/00, F17C 13/12

(54) **AN ARRANGEMENT FOR MOUNTING A BOIL-OFF PIPE OF A LIQUEFIED GAS FUEL SYSTEM TO A VEHICLE**
ANORDNUNG ZUR MONTAGE EINES VERDAMPFUNGSROHRS EINES FLÜSSIGGASKRAFTSTOFFSYSTEMS AN EIN FAHRZEUG
AGENCEMENT POUR LE MONTAGE D'UN TUYAU D'ÉVAPORATION D'UN SYSTÈME DE COMBUSTIBLE GAZEUX LIQUÉFIÉ SUR UN VÉHICULE

(30) Priority: 09.09.2016 SE 1651209
(43) Date of publication of application: 17.07.2019
(73) Proprietor: Scania CV AB, 151 87 Södertälje (SE)
(72) Inventor: LINDEBERG, Jonas, SE 852 39 Sundsvall (SE)
(74) Representative: Scania CV AB
(86) International application number: PCT/SE2017/050811
(87) International publication number: WO 2018/048336

(56) References cited:
- WO-A1-2007/084050
- WO-A1-2007/084050
- DE-A1- 4 243 184
- DE-A1- 10 118 205
- DE-A1- 10 316 915
- DE-A1- 10 316 915
- US-A- 3 088 537

## Description

### TECHNICAL FIELD

The invention relates to a vehicle having a tiltable cab and a fuel system having a chassis-mounted liquefied gas fuel tank for providing fuel to an engine and a connection arrangement comprising a flexible tube arranged to be connected at one end to the tank and at the other end to a boil-off pipe for evacuation of boil-off gas, wherein said flexible tube is extendably and retractably arranged to accommodate a tilting movement of said cab.

### BACKGROUND ART

Alternative fuels such as natural gas and biogas are being introduced in vehicles such as heavy vehicles. For this purpose fuel systems for compressed natural gas, CNG and compressed biogas CBG and fuel systems for liquefied natural gas LNG and liquefied biogas LBG are being developed.

Systems for liquefied gas, i.e. LNG and LBG, require handling of relatively low temperatures, e.g. -130 degree Celsius at 10 bar for LNG, requiring certain conduits for transporting the liquefied natural gas and a certain tank for housing the fuel. When the vehicle is standing still and the engine is not operating the pressure in the tank will increase due to temperature increase in the tank. Therefore the system for liquefied gas is provided with a relief valve which according to an embodiment is set to open at 16 bar for evacuating evaporated gas.

The fuel tank/tanks for liquefied gas systems are usually arranged along and in connection to the vehicle frame. The evaporated gas is configured to be evacuated via a so called boil-off pipe connected to the fuel tank. The gas needs to be evacuated at a certain height. The boil-off pipe is further not allowed to project laterally or upwardly from the vehicle. For trucks the boil-off pipe is therefore usually arranged behind the cab of the truck. For trucks having a tiltable cabs, i.e. cabs arranged to be tilted forwardly, the boil-off pipe is according to a variant arranged to be connected to a vertical member arranged in connection to and at a distance from the rear side of the cab to avoid influence from the tilting.

Such a solution, however, takes up space behind the cab which otherwise could be used for overhang or semi-trailer in order to optimize the length of the load carrying part of the vehicle.

Documents DE 103 16 915 and WO 2007/084050 show flexible tubes which are extendably and retractably arranged to accommodate a tilting movement of a cab.

### OBJECTS OF THE INVENTION

An object of the present invention is to provide a vehicle having a tiltable cab and a fuel system having a chassis-mounted liquefied gas fuel tank for providing fuel to an engine and a connection arrangement comprising a flexible tube arranged to be connected at one end to the tank and at the other end to a boil-off pipe for evacuation of boil-off gas, wherein said flexible tube is extendably which facilitates optimizing the length of a load carrying part of the vehicle and a safe and efficient tilting of the cab.

### SUMMARY OF THE INVENTION

These and other objects, apparent from the following description, are achieved by a vehicle as set out in the appended independent claim 1. Preferred embodiments of the vehicle are defined in appended dependent claims.

Specifically an object of the invention is achieved by a vehicle having a tiltable cab and a fuel system having a chassis-mounted liquefied gas fuel tank for providing fuel to an engine and a connection arrangement comprising a flexible tube arranged to be connected at one end to the tank and at the other end to a boil-off pipe for evacuation of boil-off gas, wherein said flexible tube is extendably and retractably arranged to accommodate a tilting movement of said cab.

Said boil-off pipe is arranged in connection to a rear side of the cab via a connection arrangement in said vehicle.

By thus attaching the boil-off pipe to the rear side of the vehicle cab the length of a load carrying part of the vehicle arranged behind the cab may be optimized. By thus extendably and retractably arranging a flexible tube connected between the tank and the boil-off pipe no disconnection of the connection arrangement is required in order to tilt the cab to the tilted position. Thus, hereby a safe and efficient tilting of the cab is facilitated.

According to an embodiment of the vehicle said connection arrangement comprises a winder unit arranged between said tank and said boil-off pipe, said winder unit being arranged to provide said extendability and retractability by unwinding and winding of said flexible tube. By thus winding and unwinding the flexible tube with a winder unit the flexible tube will be efficiently extended and retracted in a controlled way thus facilitating safe and efficient tilting of the cab and safe and efficient move of the cab back to a non-tilted position. Said flexible tube is according to an embodiment connected at said other end to the boil-off pipe via said winder unit.

According to an embodiment of the vehicle said winder unit comprises means for automatically retracting said flexible tube. Hereby efficient retraction of the flexible tube when the cab is moved back to the non-tilted position is facilitated.

According to an embodiment of the vehicle said flexible tube has spiral configuration for providing said extendability and retractability of said flexible tube. By thus providing a flexible tube with a spiral configuration the flexible tube will be efficiently extended and retracted in a controlled way thus facilitating safe and efficient tilting of the cab and safe and efficient move of the cab back to a non-tilted position.

According to an embodiment of the vehicle said flexible tube has elastic properties so as to facilitate said extendability and retractability.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1a schematically illustrates a side view of a vehicle with a tiltable cab in a non-tilted position, the vehicle having an arrangement for mounting a boil-off pipe to the cab of the vehicle according to an embodiment of the present invention;
Fig. 1b schematically illustrates a side view of the vehicle in fig. 1a with the cab in a tilted position;
Fig. 2a schematically illustrates a rear view of an arrangement for mounting a boil-off pipe of a liquefied gas fuel system according to an embodiment of the present invention;
Fig. 2b schematically illustrates a perspective view of the arrangement in fig. 2a;
Fig. 3a schematically illustrates the vehicle in fig. 1a in a non-tilted position with an arrangement for mounting a boil-off pipe to the cab of the vehicle according to an embodiment of the present invention; and
Fig. 3b schematically illustrates a side view of the vehicle in fig. 3a with the cab in a tilted position.

### DETAILED DESCRIPTION

Hereinafter the term "liquefied gas" refers to liquefied natural gas, LNG, or liquefied biogas, LBG.

Hereinafter the term "liquefied gas fuel system" refers to a fuel system for liquefied natural gas, LNG, or a fuel system for liquefied biogas, LBG.

Hereinafter the term "flexible tube" refers to any flexible tube such as a hose configured to transport fluid for a liquefied gas fuel system, said flexible tube being bendable to a certain degree and having a certain flexibility so as to facilitate taking up relative movements of a vehicle cab relative to a liquefied gas fuel tank.

Hereinafter the term "boil-off pipe" refers to a pipe, preferably a rigid pipe, configured to evacuate evaporated gas from a liquefied gas fuel tank of a liquefied gas fuel system. The pipe is according to an embodiment made of stainless steel. The boil-off pipe could alternatively be flexible such as a flexible hose.

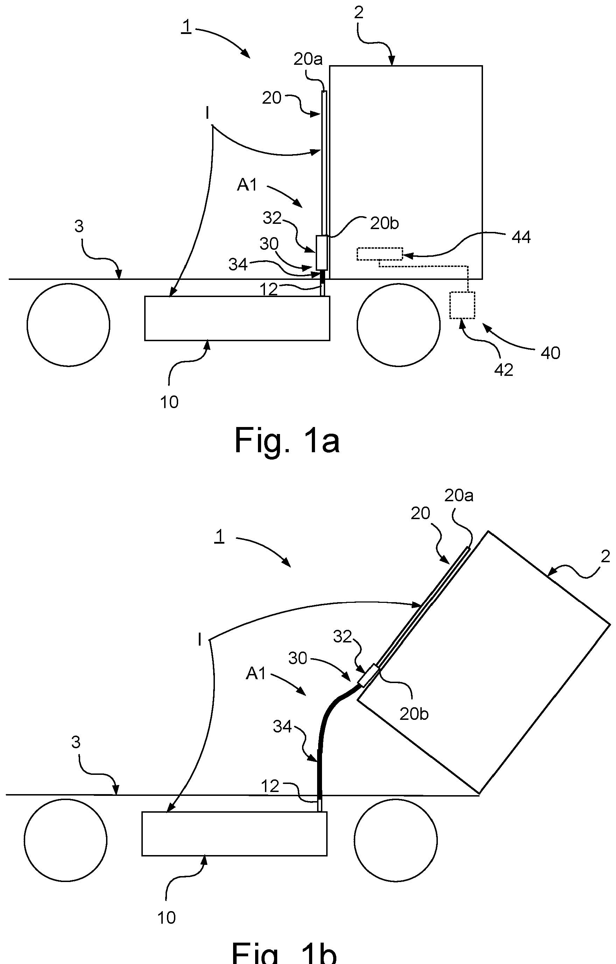

Fig. 1a schematically illustrates a side view of a vehicle 1 with a tiltable cab 2 in a non-tilted position, the vehicle 1 having an arrangement A1 for mounting a boil-off pipe 20 of a liquefied gas fuel system I according to an embodiment of the present invention and fig. 1b a side view of the vehicle 1 in fig. 1a with the cab 2 in a tilted position.

The vehicle 1 has a vehicle chassis 3. The cab 2 is tiltable relative to the vehicle chassis 3. The exemplified vehicle 1 is a heavy vehicle in the shape of a truck. The vehicle 1 is fuelled by means of a liquefied gas fuel system I for operating the engine of the vehicle 1. The vehicle 1 may be any suitable truck configured to be arranged with a load carrying part behind the cab 2. Such a vehicle may be a truck arranged to carry an overhang behind the cab 2 or a semi-trailer truck comprising a towing truck and a semi-trailer coupled to the towing truck behind the cab 2 via a fifth wheel.

The cab 2 is tiltable between a non-tilted position, illustrated in fig. 1a, in which the cab is upright and the vehicle may be driven and a tilted position, illustrated in fig. 1b. In the non-tilted position, the cab 2 is locked by means of cab locking members, not shown. The cab 2 may be tilted in any suitable way by any tiltable means. The cab 2 is according to an embodiment tiltable by means of a cab tilting operation arrangement 40 shown in fig. 1a. The cab tilting operation arrangement 40 comprises a pump unit 42 and at least one hydraulic piston unit 44 for tilting the cab 2, hydraulically connected to the pump unit 42 via a hydraulic line.

The vehicle 1 thus comprises a liquefied gas fuel system I. Said liquefied gas fuel system I comprises a chassis-mounted liquefied gas fuel tank 10 for providing fuel to the engine of the vehicle 1. Said liquefied gas fuel system I comprises a boil-off pipe 20 through which evaporated gas from the tank 10 is configured to be evacuated at a certain tank pressure. The boil-off pipe 20 is configured to be connected to the fuel tank 10. The system for liquefied gas is provided with a relief valve, not shown, which is set to open at said certain pressure, said pressure according to an embodiment being 16 bar, for evacuating evaporated gas from the tank 10 via the boil-off pipe 20. Said pressure may depend on the size of the tank.

The vehicle 1 illustrated in fig. 1a and 1b is a simplified illustration. The vehicle chassis 3 of the vehicle 1 normally comprises a vehicle frame comprising a left longitudinal vehicle beam and a right longitudinal vehicle beam, not shown. The liquefied gas fuel tank 10 is arranged in connection to the vehicle frame. The liquefied gas fuel tank 10 may according to an embodiment comprise a left liquefied gas fuel tank part arranged in connection to a left longitudinal vehicle beam and a right liquefied gas fuel tank part arranged in connection to the right longitudinal beam of the chassis of the vehicle 1.

The vehicle comprises an arrangement A1 for mounting the boil-off pipe 20 of said liquefied gas fuel system I to the vehicle. The arrangement A1 for mounting the boil-off pipe 20 to the vehicle 1 comprises a connection arrangement 30. The boil-off pipe 20 is configured to be connected to the fuel tank 10 via said connection arrangement 30. The connection arrangement 30 is according to an embodiment connected to a pipe 12 of the tank 10. Said relief valve is according to an embodiment arranged in connection to said pipe 12.

The boil-off pipe 20 is attached to the rear side of the cab 2. The boil-off pipe 20 is arranged to be fixedly attached to the rear side of the cab 2 by means of any suitable attachment means, e.g. any suitable joints such as one or more screw joints. The boil-off pipe 20 is thus arranged to be tilted together with the cab 2 when the cab 2 is tilted to the tilted position.

The boil-off pipe 20 has an upper side 20a with an opening through which said evaporated gas is arranged to be evacuated and an opposing lower side 20b configured to be connected to the tank 10 via said connection arrangement 30.

The connection arrangement 30 comprises a winder unit 32 arranged between said tank 10 and said boil-off pipe 20. The connection arrangement 30 comprises a flexible tube 34 connected at one end to the tank 10 via said pipe 12 and at the other end to the boil-off pipe 20 via said winder unit 32.

The winder unit 32 is arranged to provide an extendability and retractability of said flexible tube 34 by unwinding and winding of said flexible tube 34 when the cab 2 is moved between the non-tilted and tilted positions. Thus, the flexible tube is arranged to be winded on the winder unit 32 in the non-tilted position of the cab 2 and unwinded in the tilted position of the cab 2.

The winder unit 32 is according to this embodiment arranged to be attached to the rear side of the cab 2.

The vehicle in fig. 1a-b comprises a connection arrangement assembly 10, 20, 30 comprising said chassis-mounted liquefied gas fuel tank 10, said cab-mounted boil-off pipe 20 and said connection arrangement 30, wherein said connection arrangement 30 is arranged to operatively connect the gas fuel tank 10 with the cab-mounted boil-off pipe 20 in both the tilted cab position and non-tilted cab position. Thus, said chassis-mounted liquefied gas fuel tank 10, said cab-mounted boil-off pipe 20 and said connection arrangement 30 provides a connection arrangement assembly 10, 20, 30, wherein said connection arrangement 30 is arranged to operatively connect the gas fuel tank 10 with the cab-mounted boil-off pipe 20 in both the tilted cab position and non-tilted cab position.

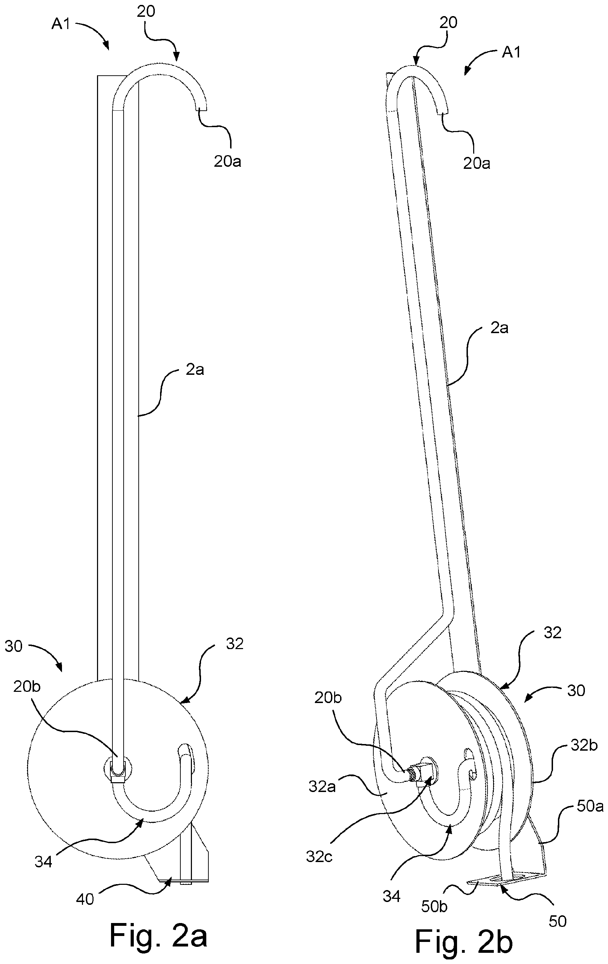

Fig. 2a-b described below illustrate a specific embodiment of the connection arrangement 30 of the arrangement A1.

Fig. 2a schematically illustrates a rear view of an embodiment of an arrangement A1 for mounting a boil-off pipe 20 of a liquefied gas fuel system to a vehicle, and fig. 2b schematically illustrates a perspective view of the arrangement A1 in fig. 2a.

The arrangement A1 for mounting a boil-off pipe 20 to a tiltable cab of a vehicle comprises a connection arrangement 30. The connection arrangement 30 comprises a winder unit 32. The winder unit 32 has a cylindrical shape having a circular intermediate cylinder coaxially arranged between two opposite circular elements 32a, 32b with larger diameter than the intermediate cylinder. The flexible tube 34 is arranged to be winded around said intermediate cylinder in the non-tilted position of the cab.

Said two opposite circular elements 32a, 32b comprises a first circular element 32a arranged to face away from the cab and a second circular element 32b arranged to face towards the rear side of the cab.

The winder unit 32 is configured to be arranged between the not shown tank and said boil-off pipe 20. The winder unit 32 is arranged to be attached to the rear side of the cab, not shown.

The arrangement A1 for mounting a boil-off pipe 20 comprises an elongated fastening element 2a along which the boil-off pipe 20 is attached. The elongated fastening element 2a is intended to be attached to the rear side of the cab. The winder unit 32 is configured to be attached to the rear side of the cab via said elongated fastening element 2a.

The boil-off pipe 20 is connected to the centre of the first circular element 32a. An end of said flexible tube 34 is connected to the boil-off pipe 20 at the centre of the first circular element 32a.

The connection arrangement 30 comprises a flexible tube 34 connected at one end to the tank 10 via said pipe 12 and at the other end to the boil-off pipe 20 via said winder unit 32.

The arrangement A1 for mounting a boil-off pipe 20 comprises a support member 50 for supporting the winder unit 32. The support member comprises a connection portion 50a configured to be connected to the second circular element 32b and configured to extend downwardly below the winder unit 32. The support member 50 comprises a guide portion 50b extending essentially perpendicularly from the connection portion 50a outwardly from the rear side of the cab. The flexible tube 34 is arranged to be guided to the tank via an opening in the guide portion 50b of the support member 50.

The winder unit 32 is arranged to provide an extendability and retractability of said flexible tube 34 by unwinding and winding of said flexible tube 34 when the cab 2 is moved between the non-tilted and tilted positions. Thus, the flexible tube is arranged to be winded on the winder unit 32 in the non-tilted position of the cab 2 and unwinded in the tilted position of the cab 2.

Said winder unit 32 comprises according to an embodiment means 32c for automatically retracting said flexible tube 34. The means 32c for automatically retracting said flexible tube 34 is arranged in connection to the hub of the winder unit 32 for rotating said winder unit 32 for said automatic retraction by winding said flexible tube 34. The means 32c may not be visible in fig. 2b, the reference sign 32c however indicating that the means 32c for automatically retracting the flexible tube may be arranged within the hub of the winder unit 32 and/or externally in connection to the hub.

The means 32c for automatically retracting said tube 34 comprises according to an embodiment a spring member arranged to provide a spring action such that a spring resistance for unwinding the flexible tube 34 is provided. The spring member of the means 32c is thus arranged to provide a spring resistance allowing unwinding of the flexible tube 34 during tilting of the cab and a spring action when the cab is returned from a tilted position to a non-tilted position, wherein winding by means of the winder unit 32 is effected by means of said spring action such that the flexible tube is automatically retracted by being winded on the winder unit 32.

The means 32c for automatically retracting said tube 34 may alternatively comprises a motor for providing said automatic retraction.

According to an alternative embodiment the flexible tube 34 may be manually retracted e.g. by means of a handle or the like arranged in connection to the hub of the winder unit 32.

The winder unit 32 could according to an alternative embodiment be fixedly attached to the chassis of the vehicle instead of the rear side of the cab. In this embodiment the boil-off pipe will not be directly connected to the winder unit 32.

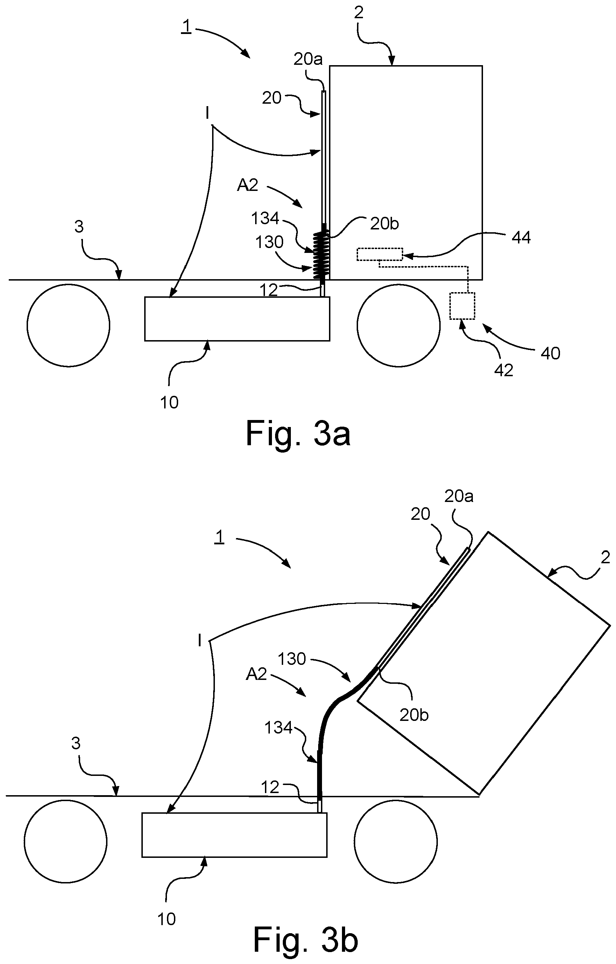

Fig. 3a schematically illustrates the vehicle in fig. 1a in a non-tilted position with an arrangement A2 for mounting a boil-off pipe 20 to the cab 2 of the vehicle according to an embodiment of the present invention; and fig. 3b schematically illustrates a side view of the vehicle in fig. 3a with the cab 2 in a tilted position.

The vehicle comprises an arrangement A2 for mounting the boil-off pipe 20 of said liquefied gas fuel system I to the vehicle. The arrangement A2 for mounting the boil-off pipe 20 to the vehicle 1 comprises a connection arrangement 130. The boil-off pipe 20 is configured to be connected to the fuel tank 10 via said connection arrangement 130. The connection arrangement 130 is according to an embodiment connected to a pipe 12 of the tank 10. Said relief valve is according to an embodiment arranged in connection to said pipe 12.

The boil-off pipe 20 is attached to the rear side of the cab 2. The boil-off pipe 20 is arranged to be fixedly attached to the rear side of the cab 2 by means of any suitable attachment means, e.g. any suitable joints such as one or more screw joints. The boil-off pipe 20 is thus arranged to be tilted together with the cab 2 when the cab 2 is tilted to the tilted position.

The boil-off pipe 20 has an upper side 20a with an opening through which said evaporated gas is arranged to be evacuated and an opposing lower side 20b configured to be connected to the tank 10 via said connection arrangement 130.

The connection arrangement 130 comprises a flexible tube 134 connected at one end to the tank 10 via said pipe 12 and at the other end to the boil-off pipe 20. The flexible tube 134 has spiral configuration for providing extendability and retractability of said flexible tube 134.

The spiral configuration of the flexible tube 134 is thus part of the connection arrangement 130. The flexible tube 134 is configured to be retracted to the spiral configuration in the non-tilted position of the cab 2 and be extended from said spiral configuration to an extended configuration when the cab 2 is tilted from said non-tilted position to said tilted position. The flexible tube 134 thus has a helical shape/spiral shape in the non-tilted position of the cab 2. The flexible tube 134 thus configured such that it has a helical shape/spiral shape when no extension force is provided to the flexible tube 134.

The flexible tube 134 is configured to automatically retract to the spiral configuration when the cab 2 is returned from a tilted position to a non-tilted position. The flexible tube 134 thus has a shape and configuration comparable to e.g. a telephone cable with a spiral configuration or a cable with a spiral configuration connected to an industrial robot.

The vehicle 1 in fig. 3a-b comprises a connection arrangement assembly 10, 20, 130 comprising said chassis-mounted liquefied gas fuel tank 10, said cab-mounted boil-off pipe 20 and said connection arrangement 130, wherein said connection arrangement 130 is arranged to operatively connect the gas fuel tank 10 with the cab-mounted boil-off pipe 20 in both the tilted cab position and non-tilted cab position. Thus, said chassis-mounted liquefied gas fuel tank 10, said cab-mounted boil-off pipe 20 and said connection arrangement 130 provides a connection arrangement assembly 10, 20, 130, wherein said connection arrangement 130 is arranged to operatively connect the gas fuel tank 10 with the cab-mounted boil-off pipe 20 in both the tilted cab position and non-tilted cab position.

According to a not shown embodiment the connection arrangement of the arrangement for mounting a boil-off pipe to a vehicle may comprise a flexible tube having elastic properties so as to facilitate said extendability and retractability. The flexible tube thus, according to an embodiment, has lastic properties so as to facilitate said extendability and retractability.

Thus, at least part of the extension of the flexible hose may be obtained by elastic extension of the flexible tube such that the actual length of the tube is increased. The flexible tube 34; 134 according to one or more of the embodiments described above with reference to fig. 1a-b, 2a-b and 3a-b may comprise such elastic properties so as to facilitate extension of the flexible tube.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. A vehicle (1) comprising a tiltable cab (2), a connection arrangement (30; 130), and a boil-off pipe (20) being arranged in connection to a rear side of the cab (2) via the connection arrangement (30; 130), wherein the vehicle (1) further comprises a fuel system having a chassis-mounted liquefied gas fuel tank (10) for providing fuel to an engine of the vehicle (1), wherein evaporated gas is arranged to be evacuated from said tank (10) via said boil-off pipe (20) at a certain tank pressure, wherein said boil-off pipe (20) is attached to the rear side of the cab (2), wherein said connection arrangement (30; 130) comprises a flexible tube (34; 134) arranged to be connected at one end to the tank (10) and at the other end to the boil-off pipe (20), wherein said flexible tube (34; 134) is extendably and retractably arranged to accommodate a tilting movement of said cab (2).

2. A vehicle (1) according to claim 1, wherein said connection arrangement (30) comprises a winder unit (32) arranged between said tank (10) and said boil-off pipe (20), said winder unit (32) being arranged to provide said extendability and retractability by unwinding and winding of said flexible tube (34).

3. A vehicle (1) according to claim 2, wherein said winder unit (32) comprises means (32c) for automatically retracting said tube (34).

4. A vehicle (1) according to claim 1, wherein said flexible tube (134) has spiral configuration for providing said extendability and retractability of said flexible tube (134).

5. A vehicle (1) according to any one of the claims 1-4, wherein said flexible tube has elastic properties so as to facilitate said extendability and retractability.

6. A vehicle (1) according to any one of the claims 1-5, wherein said connection arrangement (30; 130) is arranged to operatively connect the gas fuel tank (10) with the cab-mounted boil-off pipe (20) in both a tilted cab position and non-tilted cab position.

## Patentansprüche

1. Fahrzeug (1) mit einem kippbaren Fahrerhaus (2), einer Verbindungsanordnung (30; 130) und einem in Verbindung mit einer Rückseite des Fahrerhauses (2) über die Verbindungsanordnung (30; 130) angeordneten Verdampfungsrohr (20), wobei das Fahrzeug (1) ferner ein Kraftstoffsystem mit einem an dem Fahrgestell angebrachten Flüssiggastank (10) umfasst, um einen Motor des Fahrzeugs (1) mit Kraftstoff zu versorgen, wobei verdampftes Gas bei einem bestimmten Tankdruck über das Verdampfungsrohr (20) aus dem Tank (10) abgeleitet wird, wobei das Verdampfungsrohr (20) an der Rückseite des Fahrerhauses (2) angebracht ist, wobei die Verbindungsanordnung (30; 130) einen flexiblen Schlauch (34; 134) umfasst, der dazu eingerichtet ist, an einem Ende mit dem Tank (10) und an dem anderen Ende mit dem Verdampfungsrohr (20) verbunden zu werden, wobei der flexible Schlauch (34; 134) ausfahrbar und einfahrbar angeordnet ist, um sich einer Kippbewegung des Fahrerhauses (2) anzupassen.

2. Fahrzeug (1) nach Anspruch 1, wobei die Verbindungsanordnung (30) eine Wickeleinheit (32) umfasst, die zwischen dem Tank (10) und dem Verdampfungsrohr (20) angeordnet ist, wobei die Wickeleinheit (32) dazu eingerichtet ist, die Ausfahrbarkeit und Einfahrbarkeit durch Abwickeln und Aufwickeln des flexiblen Schlauchs (34) zu gewährleisten.

3. Fahrzeug (1) nach Anspruch 2, wobei die Wickeleinheit (32) ein Mittel (32c) zum automatischen Einfahren des Schlauches (34) umfasst.

4. Fahrzeug (1) nach Anspruch 1, wobei der flexible Schlauch (134) eine Spiralkonfiguration aufweist, um die Ausfahrbarkeit und Einfahrbarkeit des flexiblen Schlauchs (134) zu gewährleisten.

5. Fahrzeug (1) nach einem der Ansprüche 1 bis 4, wobei der flexible Schlauch zur leichteren Ausfahrbarkeit und Einfahrbarkeit elastische Eigenschaften aufweist.

6. Fahrzeug (1) nach einem der Ansprüche 1 bis 5, wobei die Verbindungsanordnung (30; 130) dazu eingerichtet ist, den Gastank (10) mit dem an dem Fahrerhaus angebrachten Verdampfungsrohr (20) funktionsfähig zu verbinden, sowohl wenn das Fahrerhaus gekippt als auch wenn das Fahrerhaus nicht gekippt ist.

## Revendications

1. Véhicule (1) comprenant une cabine inclinable (2), un agencement de raccord (30 ; 130), et un tuyau d'évaporation (20) étant agencé en raccordement avec un côté arrière de la cabine (2) via l'agencement de raccord (30 ; 130), dans lequel le véhicule (1) comprend en outre un système de carburant ayant un réservoir de carburant de gaz liquéfié monté sur châssis (10) pour fournir du carburant à un moteur du véhicule (1), dans lequel le gaz évaporé est agencé pour être évacué dudit réservoir (10) via ledit tuyau d'évaporation (20) à une certaine pression de réservoir, dans lequel ledit tuyau d'évaporation (20) est fixé au côté arrière de la cabine (2), dans lequel ledit agencement de raccord (30 ; 130) comprend un tube flexible (34 ; 134) agencé pour être raccordé à une extrémité au réservoir (10) et au niveau de l'autre extrémité au tuyau d'évaporation (20), dans lequel ledit tube flexible (34 ; 134) est agencé de manière à pouvoir s'étendre et se rétracter pour s'adapter à un mouvement d'inclinaison de ladite cabine (2).

2. Véhicule (1) selon la revendication 1, dans lequel ledit agencement de raccord (30) comprend une unité d'enroulement (32) agencée entre ledit réservoir (10) et ledit tuyau d'évaporation (20), ladite unité d'enroulement (32) étant agencée pour fournir lesdites extensibilité et rétractabilité par déroulement et enroulement dudit tube flexible (34).

3. Véhicule (1) selon la revendication 2, dans lequel ladite unité d'enroulement (32) comprend des moyens (32c) destinés à rétracter automatiquement ledit tube (34).

4. Véhicule (1) selon la revendication 1, dans lequel ledit tube flexible (134) a une configuration en spirale destinée à fournir lesdites extensibilité et rétractabilité dudit tube flexible (134) .

5. Véhicule (1) selon l'une quelconque des revendications 1 à 4, dans lequel ledit tube flexible a des propriétés élastiques de manière à faciliter lesdites extensibilité et rétractabilité.

6. Véhicule (1) selon l'une quelconque des revendications 1 à 5, dans lequel ledit agencement de raccord (30 ; 130) est agencé de façon à raccorder de manière fonctionnelle le réservoir de carburant gazeux (10) au tuyau d'évaporation monté sur la cabine (20) à la fois dans une position de cabine inclinée et dans une position de cabine non inclinée.
